# EUROPÄISCHE PATENTANMELDUNG

(11) **EP 1 616 756 A1**
(43) Veröffentlichungstag der Anmeldung: **18.01.2006**
(21) Anmeldenummer: 05015077.0
(22) Anmeldetag: 12.07.2005
(51) Int. Cl.: B60R 5/04

(54) **Laderaumabdeckung**

(30) Priorität: 16.07.2004 DE 102004034407
(71) Anmelder: HS Genion GmbH, 82152 Krailing (DE)
(72) Erfinder: Plettrichs, Ulf, 86862 Dillishausen (DE); Klingenberg, Jürgen, 82061 Neuried (DE); Wegener, Fritz, 82205 Gilching (DE); Biecker, Peter, 82041 Oberhaching (DE)

(57) **Zusammenfassung**

Es wird eine Laderaumabdeckung (26) für einen mit einer Heckklappe (12) verschließbaren Laderaum (18) eines Kraftfahrzeuges (10) vorgeschlagen. Die Laderaumabdeckung (12) umfasst ein rolloartiges Abdeckelement (28), das zumindest teilweise auf eine Wickelwelle (32) aufrollbar ist. Um die Zugänglichkeit des Laderaums zu verbessern, ist das Abdeckelement (28) erfindungsgemäß in Betriebsstellung an seinem vorderen Ende fahrzeugfest und mit seinem hinteren Ende an die hintere Heckklappe (12) angebunden, so dass das Abdeckelement (28) beim Öffnen der Heckklappe (12) verschwenkt und von der Wickelwelle (32) abgerollt wird.

## Beschreibung

Die Erfindung betrifft eine Laderaumabdeckung für einen mit einer Heckklappe verschließbaren Laderaum eines Kraftfahrzeuges nach dem Oberbegriff des Patentanspruchs 1.

Eine derartige Laderaumabdeckung ist aus der Praxis bekannt und üblicherweise so ausgeführt, dass ein rolloartiges, aus einem flexiblen, flächigen Material gefertigtes Abdeckelement, das mit einer hinter einer Rückenlehne eines Rücksitzes angeordneten Wickelwelle verbunden ist, nach hinten über den Laderaum gezogen und so in Schließstellung gebracht werden kann. Zur Sicherung des Abdeckelements im geschlossenen, ausgezogenen Zustand kann dieses an seitlichen Fixiereinrichtungen eingehängt werden, die an den Laderaumseitenwänden angeordnet sind. Mittels einer an der Wickelwelle angreifenden und in Umfangsrichtung der Wickelwelle wirkenden Federeinrichtung ist das Abdeckelement in Öffnungsrichtung vorgespannt, so dass das Abdeckelements beim Öffnen selbsttätig auf der Wickelwelle aufgerollt und in einem die Wickelwelle umschließenden Gehäuse aufgenommen wird. Das Gehäuse kann lösbar in einem vorderen Bereich des Laderaums eingespannt sein. Wenn große Gegenstände in den Laderaum eingebracht oder diesem entnommen werden sollen, kann insbesondere der hintere Endbereich des Abdeckelements störend wirken. Üblicherweise wird das Abdeckelement daher in einem solchen Fall geöffnet, d.h. eingerollt, oder sogar zusammen mit dem Gehäuse und der Wickelwelle aus dem Kraftfahrzeug entnommen.

Des Weiteren sind Laderaumabdeckungen bekannt, die ein Abdeckelement aus einer starren Platte aufweisen, die beim Öffnen der Heckplatte über eine Schuranbindung nach oben geschwenkt werden. Solche Laderaumabdeckungen sind aber sehr sperrig.

Der Erfindung liegt die Aufgabe zugrunde, eine Laderaumabdeckung der einleitend genannten Gattung zu schaffen, die auch im ausgezogenen Zustand beim Be- und Entladen des Kraftfahrzeugs über das Fahrzeugheck eine verbesserte Zugänglichkeit des Laderaums bietet.

Diese Aufgabe ist erfindungsgemäß durch die Laderaumabdeckung mit den Merkmalen des Patentanspruches 1 gelöst.

Durch die erfindungsgemäße Auslegung der Laderaumabdeckung wird das Abdeckelement im zugezogenen bzw. geschlossenen Zustand beim Öffnen der Heckklappe zusammen mit dieser nach oben verschwenkt, so dass ein großer Öffnungsquerschnitt des Laderaums vorliegt und das Abdeckelement bei einem Lade- oder Entladevorgang keine Behinderung darstellt. Mit dem Öffnen der Heckklappe vergrößert sich der von der Wickelwelle abgerollte Bereich des Abdeckelements etwa um den Betrag, um den sich der Abstand zwischen dem Anbindungsbereich für das Abdeckelements an der Heckklappe und dem fahrzeugfesten Anbindungsbereich für das Abdeckelement vergrößert. Beim Schließen der Heckklappe wird das Abdeckelement wieder in seine Ausgangsstellung zurückgeschwenkt, so dass es eine im Wesentlichen horizontal ausgerichtete flächige Abdeckung für den Laderaum bildet. Hierbei wird der beim Öffnen der Heckklappe von der Wickelwelle abgerollte Bereich des Abdeckelements wieder auf die Wickelwelle aufgerollt. Im geschlossenen Zustand der Heckklappe und des Abdeckelements ist also ein Materialvorrat für das Abdeckelement an der Wickelwelle aufgerollt.

Der Aufrollvorgang kann selbsttätig erfolgen, wenn die Wickelwelle in Umfangsrichtung federbelastet ist und auf das Abdeckelement somit eine Zugkraft ausgeübt wird.

Die Laderaumabdeckung nach der Erfindung eignet sich insbesondere zum Einsatz bei sogenannten Kombis, bei Vans, bei Compactvans oder bei sogenannten Sport Utility Vehicles (SUV), die jeweils eine Heckklappe aufweisen und bei denen der Laderaum unter anderem aus Sicherheitsgründen mit einem Abdeckelement abgedeckt wird.

Bei einer bevorzugten Ausführungsform der Laderaumabdeckung nach der Erfindung ist die Wickelwelle in der Heckklappe integriert. Dadurch ist das Abdeckelement im vollständig aufgerollten Zustand, d. h. wenn die vordere fahrzeugfeste Anbindung des Abdeckelements gelöst ist, im Wesentlichen vollständig in der Heckklappe aufgenommen. Der Laderaum ist dann nicht von einem gegebenenfalls störenden Gehäuse für die Wickelwelle und das Abdeckelement überspannt. Der Laderaum kann in diesem Falle also ohne weitere Maßnahmen vollständig bis unter das Fahrzeugdach des betreffenden Kraftfahrzeugs genutzt werden.

Alternativ ist es natürlich denkbar, dass die Wickelwelle, wie üblich, beispielsweise mittels eines im Fahrzeug einspannbaren Gehäuses fahrzeugfest fixiert und mit dem vorderen Ende des Abdeckelements verbunden ist und dass das hintere Ende des Abdeckelements beispielsweise über einen so genannten Zugspriegel lösbar mit der Heckklappe verbunden ist. Der Zugspriegel kann an der Heckklappe eingehängt sein.

Wenn die vorzugsweise lösbare Fixierung des Abdeckelements an der Heckklappe manuell erfolgt, ist es dann zweckmäßig, wenn die Heckklappe mit einem separat klappbaren Bereich, wie einem Fenster, versehen ist.

Um das Abdeckelement auf einfache Weise einerseits in Betriebstellung verfahren, d. h. schließen, und andererseits in Öffnungsstellung verfahren zu können, sind vorzugsweise beidseits des Abdeckelements angeordnete, fahrzeugfeste Führungsschienen vorgesehen, von denen zumindest eine mit einem Linearantrieb für das Abdeckelement versehen ist. Der Linearantrieb greift zum Öffnen und Schließen des Abdeckelements an dessen in den Führungsschienen geführten, seitlichen Bereichen bzw. an dessen freiem Ende an und führt dieses entweder nach hinten oder nach vorne.

Der Linearantrieb kann auch zur fahrzeugfesten Fixierung des vorderen Endes des Abdeckelements dienen, wobei in diesem Falle die Wickelwelle in der Heckklappe integriert ist. Wenn jedoch die Wickelwelle fahrzeugfest, d.h. im Fahrzeuginneren angeordnet ist, ist es vorteilhaft, wenn das hintere Ende des Abdeckelements zur Fixierung an der Heckklappe mit einem Haltemechanismus zusammenwirkt.

Um das Abdeckelement beim Öffnen der Heckklappe entlang einer definierten Faltkante nach oben schwenken zu können, weisen die Führungsschienen vorzugsweise jeweils einen vorderen, schlitzartigen Führungsbereich und einen hinteren, nach oben offenen Auflagebereich auf.

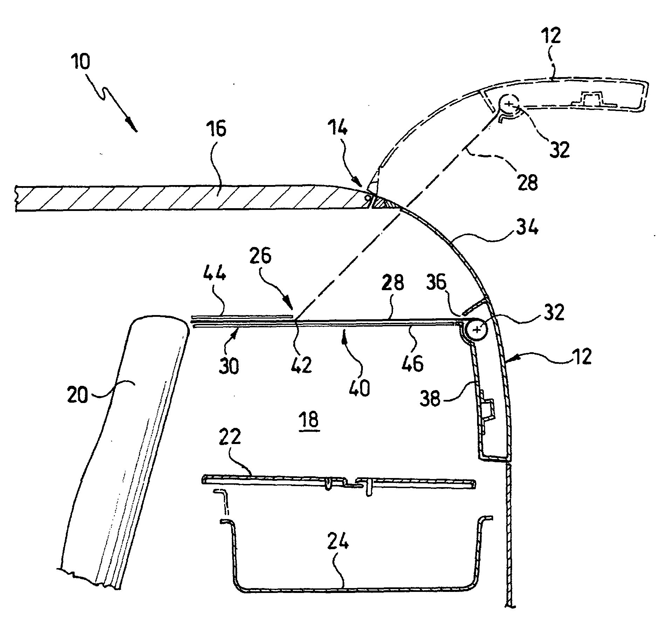

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel einer Laderaumabdeckung nach der Erfindung ist in der Zeichnung schematisch vereinfacht dargestellt und wird in der nachfolgenden Beschreibung näher erläutert.

Die einzige Figur der Zeichnung zeigt einen Längsschnitt durch einen Heckbereich eines mit einer Heckklappe versehenen Kraftfahrzeugs.

In der Zeichnung ist ein als sogenannter Kombi, Van oder dergleichen ausgeführtes Kraftfahrzeug 10 dargestellt, das mit einer Heckklappe 12 versehen ist, die über Scharnierelemente 14 an ein Dach 16 des Kraftfahrzeuges 10 angelenkt ist und zum Öffnen einer heckseitigen Öffnung des Kraftfahrzeugs 10 nach oben schwenkbar ist. Die Heckklappe 12 bildet eine heckseitige Begrenzung eines Laderaums 18, der bei der in der Zeichnung dargestellten Anordnung an der der Heckklappe abgewandten Seite, d. h. vorne, von einer klappbaren Rückenlehne 20 einer Rückbank des Kraftfahrzeuges 10 begrenzt ist. Des Weiteren ist der Laderaum 18 mit einem Ladeboden 22 versehen, der eine Wanne 24 überdeckt.

Der Laderaum 18 ist mit einer Laderaumabdeckung 26 versehen, die ein Abdeckelement 28 umfasst, das in Betriebstellung, d. h. im geschlossenen und ausgezogenen Zustand, eine plane Fläche bildet, das sich zwischen der Oberkante der Rückenlehne 20 des Rücksitzes und der Heckklappe 12 erstreckt und in beidseits an den seitlichen Laderaumwänden angeordneten Führungsschienen 30 geführt ist.

Das Abdeckelement 28 ist rolloartig ausgebildet und wirkt mit einer Wickelwelle 32 zusammen, die unterhalb eines Heckfensters 34 in der Heckklappe 12 integriert ist. Das Abdeckelement 28 besteht aus einem flexiblen Kunststoffwerkstoff und ist somit auf die Wickelwelle 32 aufrollbar.

In Betriebstellung, d. h. in der in der Figur dargestellten Anordnung, ist das Abdeckelement 28 in seinem vorderen Endbereich, der an die Rückenlehne 20 des Rücksitzes angrenzt, fahrzeugfest angebunden. Mit seinem hinteren Ende, d. h. mit seinem der Rückenlehne 20 abgewandten Ende, ist das Abdeckelement 28 über die Wickelwelle 32 an die Heckklappe 12 angebunden.

Des Weiteren ist in Höhe der Wickelwelle 32 an einer inneren Verkleidung 38 der Heckklappe 12 ein Schlitz 36 ausgebildet, über den das Abdeckelement 28 aus der Heckklappe 12 austritt und zu einem Führungsbereich 40 geführt ist, der mit den Führungsschienen 30 fluchtet. Durch den Führungsbereich 40 ist ein Übergabebereich gebildet, mittels dessen das Abdeckelement 28 zum Verfahren in Betriebsstellung, d. h. zum Abrollen von der Wickelwelle, an einen hier nicht näher dargestellten, in den Führungsschienen 30 integrierten Linearantrieb übergeben werden kann. Der Linearantrieb, der zweckmäßigerweise mit einem Elektromotor versehen ist, dient dazu, das Abdeckelement 28 von der Wickelwelle 32 abzurollen und nach vorne über den Laderaum 18 zu führen, so dass der Laderaum 18 nach oben geschlossen wird.

Beim Öffnen der Heckklappe 12, d. h. beim Verschwenken der Heckklappe 12 in die in der Figur gestrichelt dargestellte Stellung, wird das Abdeckelement 28 zusammen mit der Heckklappe 12 nach oben geschwenkt. Bei dem Schwenkvorgang wird das Abdeckelement 28 weiter um einen zusätzlichen, der jeweiligen Öffnung der Heckklappe angepassten Betrag von der Wickelwelle 32 abgerollt, wobei es stets vorne fahrzeugfest und hinten an die Heckklappe 12 angebunden ist. Beim Aufschwenken wird das Abdeckelement entlang einer Faltkante 42 geknickt, die durch hintere Kanten oberer Schenkel eines schlitzförmigen Führungsbereichs 44 der Führungsschienen 30 gebildet ist. Der schlitzförmige Führungsbereich 44 geht heckseitig jeweils in einen oben offenen Auflagebereich 46 der Führungsschienen 30 über.

Durch den ausreichend großen Auszugweg bzw. Materialvorrat für das Abdeckelement 28 in dem von der Wickelwelle 32 gebildeten Mechanismus ist es möglich, die Heckklappe 12 auch bei geschlossener Laderaumabdeckung 26 zu öffnen. Das Verschwenken des Abdeckelements 28 nach oben verbessert die Zugänglichkeit des Laderaums 18.

### Bezugszeichenliste

- 10: Kraftfahrzeug
- 12: Heckklappe
- 14: Scharnierelemente
- 16: Dach
- 18: Laderaum
- 20: Rückenlehne
- 22: Ladeboden
- 24: Wanne
- 26: Laderaumabdeckung
- 28: Abdeckelement
- 30: Führungsschienen
- 32: Wickelwelle
- 34: Heckfenster
- 36: Schlitz
- 38: Verkleidung
- 40: Führungsbereich
- 42: Faltkante
- 44: Führungsbereich
- 45: Auflagebereich

## Patentansprüche

1. Laderaumabdeckung für einen mit einer Heckklappe (12) verschließbaren Laderaum (18) eines Kraftfahrzeuges (10), mit einem rolloartigen Abdeckelement (28), das zumindest teilweise auf eine Wickelwelle (32) aufrollbar ist, **dadurch gekennzeichnet, dass** das Abdeckelement (28) in Betriebstellung mit seinem vorderen Ende fahrzeugfest und mit seinem hinteren Ende an die Heckklappe (12) angebunden ist, so dass das Abdeckelement (28) beim Öffnen der Heckklappe (12) verschwenkt und von der Wickelwelle (32) abgerollt wird.

2. Laderaumabdeckung nach Anspruch 1, **dadurch gekennzeichnet, dass** die Wickelwelle (32) in der Heckklappe (12) integriert ist.

3. Laderaumabdeckung nach Anspruch 1 oder 2, **gekennzeichnet durch** beidseits des Abdeckelements (28) angeordnete, fahrzeugfeste Führungsschienen (30), von denen vorzugsweise zumindest eine mit einem Linearantrieb für das Abdeckelement (28) versehen ist.

4. Laderaumabdeckung nach Anspruch 3, **dadurch gekennzeichnet, dass** die Führungsschienen (30) jeweils einen vorderen, schlitzartigen Führungsbereich (44) und einen hinteren, oben offenen Auflagebereich (46) aufweisen.
